# EUROPÄISCHE PATENTANMELDUNG

(11) **EP 2 733 317 A2**
(43) Veröffentlichungstag der Anmeldung: **21.05.2014**
(21) Anmeldenummer: 13193316.0
(22) Anmeldetag: 18.11.2013
(51) Int. Cl.: F01K 13/00

(54) **Kraftwärmekopplungsanlage und Verfahren zum Betrieb einer Kraftwärmekopplungsanlage**

(30) Priorität: 19.11.2012 DE 102012111101
(71) Anmelder: Clausthaler Umwelttechnik-Institut Gmbh (Cutec - Institut), 38678 Clausthal-Zellerfeld (DE)
(72) Erfinder: Reindorf, Torsten, 38678 Clausthal-Zellerfeld (DE)
(74) Vertreter: Günther, Constantin

(57) **Zusammenfassung**

Die Erfindung betrifft eine Kraftwärmekopplungsanlage (18), die wenigstens einen Brenner (3), einen Wärmeabgabekreis (6, 7), der zur Kopplung mit einer Beheizungseinrichtung eingerichtet ist, und eine Generatoreinrichtung (9) aufweist, die zur Wandlung von zugeführter Wärmeenergie in mechanische und/oder elektrische Energie (10) eingerichtet ist, wobei der Brenner (3) sowohl zur Speisung der Generatoreinrichtung (9) als auch des Wärmeabgabekreises (6, 7) mit durch den Brenner (3) erzeugter Wärmeenergie eingerichtet ist, dadurch gekennzeichnet, dass die Kraftwärmekopplungsanlage (18) wenigstens ein Entkopplungsmittel (6, 12, 14, 15) aufweist, das zur variablen Aufteilung der durch den Brenner (3) erzeugten Wärmeenergie auf den Wärmeabgabekreis (6, 7) und die Generatoreinrichtung (9) eingerichtet ist. Die Erfindung betrifft außerdem ein Verfahren zum Betrieb einer Kraftwärmekopplungsanlage.

## Beschreibung

Die Erfindung betrifft eine Kraftwärmekopplungsanlage gemäß dem Oberbegriff des Anspruchs 1. Die Erfindung betrifft außerdem ein Verfahren zum Betrieb einer Kraftwärmekopplungsanlage gemäß dem Oberbegriff des Anspruchs 10.

Als Kraftwärmekopplung bezeichnet man allgemein die Kopplung zwischen einer Einrichtung oder einem Verfahren, die bzw. das zur Wärmeabgabe z. B. zu Heizzwecken eingerichtet ist, und einer Einrichtung oder einem Verfahren, die bzw. das mechanische und/oder elektrische Energie abgibt. Beispiele für Kraftwärmekopplungsanlagen sind z. B. Heizkraftwerke oder, in kleinerem Maßstab, Blockheizkraftwerke. Typisch für eine Kraftwärmekopplungsanlage ist daher, dass ein Brenner, ein Wärmeabgabekreis und eine Generatoreinrichtung vorhanden sind, wobei sowohl der Wärmeabgabekreis als auch die Generatoreinrichtung mit durch den Brenner erzeugter Wärmeenergie gespeist werden. Kraftwärmekopplungsanlagen und Verfahren zur Kraftwärmekopplung nach dem Stand der Technik weisen immer ein im Wesentlichen konstantes Verhältnis zwischen der vom Brenner dem Wärmeabgabekreis und der Generatoreinrichtung zugeführten Wärmeenergie auf. Es mag zwar die Gesamtleistung der Anlage regelbar sein, die Wärmeströme teilen sich jedoch immer gleich auf, was durch die Konstruktion der jeweiligen Anlage festgelegt ist. Diese systembedingte Kopplung führt dazu, dass immer nur dann die Generatoreinrichtung z. B. elektrischen Strom wirtschaftlich in ein Stromversorgungsnetz einspeisen kann, wenn gleichzeitig ein Wärmebedarf der Heizungsanlage vorliegt. Dies ist aber witterungsbedingt nur in bestimmten Zeiträumen gegeben, z. B. im Herbst und im Winter. So beträgt z. B. die thermische Volllastdauer eines Blockheizkraftwerks bei einem Einfamilienhaus ca. 2000 Stunden pro Jahr. Durch diese Kopplung sind gleichzeitig die Netzeinspeisung und damit auch deren Vergütung (KWK-Bonus) begrenzt. Hierdurch ist die wirtschaftliche Nutzung solcher Kraftwärmekopplungsanlagen nicht optimal und die wirtschaftliche Amortisationszeit länger als eigentlich erforderlich.

Der Erfindung liegt daher die Aufgabe zu Grunde, die Wirtschaftlichkeit einer Kraftwärmekopplungsanlage bzw. eines Verfahrens zum Betrieb einer Kraftwärmekopplungsanlage zu verbessern.

Diese Aufgabe wird gemäß Anspruch 1 gelöst durch eine Kraftwärmekopplungsanlage, die wenigstens einen Brenner, einen Wärmeabgabekreis, der zur Kopplung mit einer Beheizungseinrichtung eingerichtet ist, und eine Generatoreinrichtung aufweist, die zur Wandlung von zugeführter Wärmeenergie in mechanische und/oder elektrische Energie eingerichtet ist, wobei der Brenner sowohl zur Speisung der Generatoreinrichtung als auch des Wärmeabgabekreises mit durch den Brenner erzeugter Wärmeenergie eingerichtet ist, wobei die Kraftwärmekopplungsanlage wenigstens ein Entkopplungsmittel aufweist, das zur variablen Aufteilung der durch den Brenner erzeugten Wärmeenergie auf den Wärmeabgabekreis und die Generatoreinrichtung eingerichtet ist. Die Erfindung hat den Vorteil, dass es durch das Entkopplungsmittel möglich wird, die an den Wärmeabgabekreis und die Generatoreinrichtung abgegebenen Wärmeströme variabel aufzuteilen und damit die bisherige feste Kopplung aufzuheben. Dies hat wiederum den Vorteil, dass eine Einspeisung von durch die Generatoreinrichtung erzeugtem elektrischen Strom in ein Stromversorgungsnetz auch in solchen Zeiträumen in dem gewünschten Umfang erfolgen kann, in denen der Heizungsbedarf bei fester Kopplung nicht ausreichend hoch wäre. Bei gleichbleibender Höhe der thermischen Volllastdauer wird durch die Erfindung die Anzahl der Energieabgabestunden der Generatoreinrichtung erhöht und dadurch die Wirtschaftlichkeit der Kraftwärmekopplungsanlage deutlich verbessert.

Die Beheizungseinrichtung kann als Heizungsanlage, z.B. als Heizungsanlage eines Gebäudes, einer Maschine oder einer Industrieanlage, oder als sonstige Beheizungseinrichtung ausgebildet sein. Kennzeichnend für die Beheizungseinrichtung ist, dass zumindest zeitweise ein direkter Bedarf an Wärmeenergie vorliegt.

Die Generatoreinrichtung ist zur Wandlung von zugeführter Wärmeenergie in mechanische und/oder elektrische Energie eingerichtet. So kann die Generatoreinrichtung z. B. als Stirlingmotor ausgebildet sein, dem Wärmeenergie zugeführt wird und der mechanische Energie über eine Ausgangswelle abgibt, z. B. um eine Maschine anzutreiben. Der Stirlingmotor kann auch mit einem elektrischen Generator mechanisch gekoppelt sein, so dass hierdurch eine Generatoreinrichtung gebildet wird, durch die elektrische Energie abgegeben wird. Der Stirlingmotor ist lediglich beispielhaft genannt, auch andere Kraftmaschinen, die zur Wandlung von Wärmeenergie in mechanische und/oder elektrische Energie eingerichtet sind, können verwendet werden. Auch eine direkte Umwandlung von Wärmeenergie in elektrische Energie sei mit dem Begriff der Generatoreinrichtung umfasst, z. B. in Form eines thermoelektrischen Generators. Die Generatoreinrichtung kann auch mehrere Maschinen aufweisen, z. B. einen Stirlingmotor zur Erzeugung mechanischer Energie und einen thermoelektrischen Generator zur Erzeugung elektrischer Energie aus zugeführter Wärmeenergie.

Das Entkopplungsmittel ist, wie erwähnt, zur variablen Aufteilung der durch den Brenner erzeugten Wärmeenergie auf den Wärmeabgabekreis und die Generatoreinrichtung eingerichtet. Hierbei kann vorteilhaft vorgesehen sein, dass durch das Entkopplungsmittel der Anteil der Wärmeenergie, der dem Wärmeabgabekreis zugeführt wird, vollständig entkoppelt wird und unabhängig ist von dem Anteil der Wärmeenergie, der der Generatoreinrichtung zugeführt wird. In anderen Ausgestaltungen der Erfindung sind die Anteile der Wärmeenergien nicht völlig unabhängig voneinander, sondern es kann z. B. ihr Verhältnis zueinander variabel eingestellt werden.

Ein weiterer Vorteil der Erfindung besteht darin, dass der Brenner generell mit höherer Brennraumtemperatur betrieben werden kann, was zu einem verbesserten Ausbrand des Brennstoffes und verringerten Emissionen führt. Insbesondere können Betriebszustände vermieden werden, wie sie bei bisherigen Kraftwärmekopplungsanlagen zur Reduzierung der Gesamtwärmeabgabe eingestellt wurden, nämlich eine entsprechende Verringerung der Brennraumtemperatur. Hierdurch wird wiederum vermieden, dass auf Grund von niedrigeren Temperaturen im Brennraum bestimmte Teile des Brennstoffs unverbrannt abgegeben werden, was sowohl aus wirtschaftlicher Sicht als auch auf Grund erhöhter Emissionen nachteilig ist.

Auch der bisher teilweise angewandte intermittierende Betrieb von Kraftwärmekopplungsanlagen, d. h. deren zeitweises Abschalten, kann durch die Erfindung vermieden werden, so dass auch in dieser Hinsicht die Wirtschaftlichkeit der Anlage verbessert wird.

Ein weiterer Vorteil besteht darin, dass die Energieabgabe der Generatoreinrichtung, insbesondere wenn es sich um die Einspeisung von elektrischer Energie in ein Stromversorgungsnetz handelt, bedarfsgeführt eingestellt werden kann. Die Regelung der Kraftwärmekopplungsanlage erfolgt dann gemäß dem elektrischen Leistungsbedarf im Stromversorgungsnetz. Dies würde bei Kraftwärmekopplungsanlagen nach dem Stand der Technik zu einer gegebenenfalls unnötig großen Wärmezufuhr am Wärmeabgabekreis führen, ohne dass ein entsprechender Heizbedarf vorhanden ist. Auch dies kann durch die Erfindung vermieden werden.

Gemäß einer vorteilhaften Weiterbildung der Erfindung ist daher vorgesehen, dass das Entkopplungsmittel durch ein externes Signal gesteuert wird, das abhängig vom Bedarf an mechanischer und/oder elektrischer Energie einer externen Einrichtung, z. B. eines Stromversorgungsnetzes, bestimmt ist. Gemäß einer vorteilhaften Weiterbildung der Erfindung ist vorgesehen, dass das Entkopplungsmittel durch wenigstens eine in der Kraftwärmekopplungsanlage gemessene interne Größe gesteuert oder geregelt wird. Als interne Größe kann z.B. die Temperatur an einer oder an mehreren Stellen in der Kraftwärmekopplungsanlage gemessen werden.

Das Entkopplungsmittel kann direkt zur Aufteilung der durch den Brenner erzeugten Wärmeenergie auf den Wärmeabgabekreis und die Generatoreinrichtung und gegebenenfalls weiterer Einrichtungen eingerichtet sein, z. B. im Sinne einer Energieweiche oder eines Energieverteilers. Gemäß einer vorteilhaften Weiterbildung der Erfindung ist das Entkopplungsmittel dazu eingerichtet, die Menge der dem Wärmeabgabekreis zugeführten Wärmeenergie zu beeinflussen. Insbesondere kann vorgesehen sein, dass nur die Menge der dem Wärmeabgabekreis zugeführten Wärmeenergie durch das Entkopplungsmittel beeinflusst wird, während die an die Generatoreinrichtung abgegebene Wärmeenergie vom Entkopplungsmittel nicht beeinflusst wird.

Das Entkopplungsmittel kann z. B. eine einstellbare Klappe, ein Ventil oder ein sonstiges Stellmittel aufweisen oder als solches ausgebildet sein, mit dem der durch den ersten Wärmeübertrager geführte Wärmestrom bzw. der erwärmte Massenstrom mengenmäßig eingestellt werden kann.

Gemäß einer vorteilhaften Weiterbildung der Erfindung weist das Entkopplungsmittel ein Einstellmittel zur Einstellung des durch einen ersten Wärmeübertrager des Wärmeabgabekreises geführten Wärmestroms bzw. erwärmten Massenstroms auf. Das Einstellmittel kann z. B. als manuelles Betätigungselement oder elektrischer Aktuator oder Kombination daraus ausgebildet sein. Bei Ausbildung als manuelles Betätigungselement kann das Einstellmittel z. B. als Drehknopf oder Hebel ausgebildet sein. Bei Ausbildung als elektrischer Aktuator kann das Einstellmittel z. B. einen Stellmotor, einen Elektromagneten oder einen Piezoaktuator aufweisen.

Gemäß einer vorteilhaften Weiterbildung der Erfindung ist das Entkopplungsmittel in einer Zuführleitung zur Zuführung des Wärmestroms bzw. erwärmten Massenstroms zu dem ersten Wärmeübertrager, in einer Abfuhrleitung des ersten Wärmeübertragers oder in dem ersten Wärmeübertrager selbst angeordnet. Das Entkopplungsmittel kann auch durch den ersten Wärmeübertrager selbst gebildet werden, z. B. wenn ein Wärmeübertrager mit einem integrierten Stellmittel, z.B. einer Klappe oder einem Ventil, verwendet wird. Auch eine Kombination der erwähnten Möglichkeiten ist vorteilhaft, wobei auch mehrere Entkopplungsmittel vorgesehen werden können.

Gemäß einer vorteilhaften Weiterbildung der Erfindung weist die Kraftwärmekopplungsanlage wenigstens einen zweiten Wärmeübertrager einer Luftvorwärmungseinrichtung auf, die zum Vorwärmen der zum Brenner geführten Luft eingerichtet ist, wobei der zweite Wärmeübertrager mit durch den Brenner erzeugter Wärmeenergie gespeist ist. Bei höherer Luftvorwärmtemperatur wird der Brennstoffbedarf, der zum Erreichen einer bestimmten Brennkammertemperatur erforderlich ist, geringer. Somit kann durch die Rückübertragung eines bestimmten Anteils der erzeugten Wärmeenergie zur zugeführten Luft der Brennstoffverbrauch reduziert werden. Der zweite Wärmeübertrager kann in dieselbe den Wärmestrom bzw. erwärmten Massenstrom von dem Brenner führende Leitung eingesetzt sein wie der erste Wärmeübertrager, so dass der erste und der zweite Wärmeübertrager in Reihe angeordnet sind, oder der zweite Wärmeübertrager kann in einer separaten Leitung angeordnet sein, so dass der erste Wärmeübertrager und der zweite Wärmeübertrager über separate Zuführleitungen zur Zuführung des Wärmestroms bzw. erwärmten Massenstroms parallel mit dem Brenner verbunden sind. Sofern mehrere zweite Wärmeübertrager der Luftvorwärmungseinrichtung vorhanden sind, sind auch Kombinationen der zuvor angesprochenen Leitungsvarianten vorteilhaft. Im Falle der Reihenanordnung kann der zweite Wärmeübertrager z. B. in einer Zuführleitung zur Zuführung des Wärmestroms bzw. erwärmten Massenstroms zu dem ersten Wärmeübertrager oder in einer Abfuhrleitung des ersten Wärmeübertragers angeordnet sein. Der zweite Wärmeübertrager kann auch mit dem ersten Wärmeübertrager integriert ausgebildet sein.

Gemäß einer vorteilhaften Weiterbildung der Erfindung ist das Entkopplungsmittel in einer Abfuhrleitung des zweiten Wärmeübertragers oder in dem zweiten Wärmeübertrager selbst angeordnet oder durch den zweiten Wärmeübertrager selbst gebildet. Der zweite Wärmeübertrager kann insbesondere in Ausführungsformen ausgebildet sein, die einen hohen und regelbaren Wirkungsgrad aufweisen, z. B. Regeneratoren, Kreislaufverbundsysteme oder andere Wärmeübertrager mit einer internen Regelungsmöglichkeit.

Allgemein sind Wärmeübertrager mit regelbarem Wirkungsgrad z. B. die nachfolgend genannten Einrichtungen, die vorteilhaft zur Realisierung der Erfindung eingesetzt werden können:
- Regeneratoren mit
   - stehender Speichermasse und feststehendem Luftverteilsystem,
   - stehender Speichermasse und rotierendem Luftverteilsystem,
   - rotierenden Speichermassen und feststehendem Luftverteilsystem,
   - hin- und herbewegter Speichermasse und feststehendem Luftverteilsystem, oder
   - umlaufender Speichermasse;
- Kreislaufverbundsysteme;
- Wärmerohre;
- Rekuperatoren mit Bypass;
- Latentwärmespeicher;
- Thermochemische Wärmespeicher;
- Thermophysikalische Wärmespeicher.

Regeneratoren können aus keramischen oder metallischen Speichermassen in Form von Steinen, Wabenkörpern, Schüttkörpern, gewickelten Blechen, Drahtgeflechten und Ähnlichem bestehen. Die Regelung des Wirkungsgrads kann durch Variation der Umschaltzeit, der Drehfrequenz, der durchströmten Massen oder der zu- und abgeführten Massenströme erfolgen.

Kreislaufverbundsysteme im Hochtemperaturbereich können z. B. mit flüssigen Metallen, z. B. Natrium, oder Salzschmelzen als Wärmeträger realisiert werden. Die Regelung des Wirkungsgrads kann durch Variation des umlaufenden Wärmeträgermassenstroms erfolgen.

Auch in Hochtemperaturwärmerohren können flüssige Metalle oder Salzschmelzen als interner Wärmeträger dienen. Die Regelung des Wirkungsgrades erfolgt hierbei meist durch Verstellen der Neigung des Rohres, kann aber auch durch Ein- und Ausfahren des Wärmerohres realisiert werden.

Bei Rekuperatoren in Form von z. B. Platten-, Rohrbündel- oder Rippenrohrwärmeübertragern kann der übertragene Wärmestrom und damit der Wirkungsgrad geregelt werden, indem ein Teil der Medien am Wärmeübertrager vorbeigeführt wird.

In Latentwärmespeichern wird die Wärme hauptsächlich durch Änderung des Aggregatzustands des Speichermediums gespeichert, in thermochemischen Speichern durch endo- bzw. exotherme chemische Reaktionen und in thermophysikalischen Speichern z. B. in Form von Ad- bzw. Desorptionswärme. Eine Regelung des hindurch geführten Wärmestroms kann bei diesen Wärmeübertragern dadurch erfolgen, dass die Menge des wärmeaufnehmenden und wärmeabgebenden Mediums beeinflusst wird.

Gemäß einer vorteilhaften Weiterbildung der Erfindung ist die Generatoreinrichtung als thermoelektrischer Wandler ausgebildet, insbesondere als durch einen Stirlingmotor angetriebene Generatoreinheit. Dies erlaubt eine Stromerzeugung mit hohem Wirkungsgrad bei günstigen Investitionskosten.

Gemäß einer vorteilhaften Weiterbildung der Erfindung ist das Entkopplungsmittel hinsichtlich des Maßes der variablen Aufteilung der Wärmeenergie auf den Wärmeabgabekreis und die Generatoreinrichtung über mindestens eine äußere Eingangsgröße einstellbar. Die Eingangsgröße kann z. B. eine von einem Energieversorgungsunternehmen zugeführte Bedarfsgröße für die Einspeisung elektrischer Energie in ein Stromversorgungsnetz sein. Die Einstellbarkeit der Entkopplungseinrichtung kann durch eine Steuerung oder eine Regelung realisiert werden. Im Falle einer Steuerung wird die Eingangsgröße ohne Rückkopplung vorgegeben. Bei einer Regelung erfolgt eine Rückkopplung einer aus der Kraftwärmekopplungsanlage erfassten Größe an einen Regler, der dann hieraus nach einem Regelungsverfahren die äußere Eingangsgröße bestimmt und vorgibt. Hierdurch ist die erfindungsgemäße Kraftwärmekopplungsanlage variabel an sehr unterschiedliche Einsatzbedingungen anpassbar.

Die eingangs genannte Aufgabe gemäß Anspruch 10 wird gelöst durch ein Verfahren zum Betrieb einer Kraftwärmekopplungsanlage, die wenigstens einen Brenner, einen Wärmeabgabekreis, der zur Kopplung mit einer Beheizungseinrichtung eingerichtet ist, und eine Generatoreinrichtung aufweist, die zur Wandlung von zugeführter Wärmeenergie in mechanische und/oder elektrische Energie eingerichtet ist, wobei der Brenner sowohl die Generatoreinrichtung als auch den Wärmeabgabekreis mit durch den Brenner erzeugter Wärmeenergie speist, wobei die durch den Brenner erzeugte Wärmeenergie variabel nach Bedarf auf den Wärmeabgabekreis und die Generatoreinrichtung aufgeteilt wird.

Gemäß einer vorteilhaften Weiterbildung der Erfindung erfolgt eine Aufteilung der durch den Brenner erzeugten Wärmeenergie auf den Wärmeabgabekreis und die Generatoreinrichtung gemäß einer Regelung, der wenigstens eine in der Kraftwärmekopplungsanlage gemessene interne Größe, z.B. eine Temperatur, als Eingangsgröße zugeführt ist.

Gemäß einer vorteilhaften Weiterbildung der Erfindung sind Energiebedarfsmengen als äußere Eingangsgrößen separat für den Wärmeabgabekreis und die Generatoreinrichtung vorgebbar. Die durch den Brenner erzeugte Wärmeenergie wird nach Maßgabe der Summe der vorgegebenen Energiebedarfsmengen eingestellt und es erfolgt eine Aufteilung der durch den Brenner erzeugten Wärmeenergie auf den Wärmeabgabekreis und die Generatoreinrichtung entsprechend den einzelnen vorgegebenen Energiebedarfsmengen. Dies hat den Vorteil, dass die einzelnen Energiebedarfsmengen separat vorgegebenen werden können und durch das Verfahren automatisch eine entsprechende Verteilung der erzeugten Wärmeenergie sowie eine Anpassung der durch den Brenner insgesamt erzeugten Wärmeenergie erfolgt. Es kann somit immer ein optimaler Betrieb des Brenners, des Wärmeabgabekreises und der Generatoreinrichtung realisiert werden. Das Vorgeben der Energiebedarfsmengen für den Wärmeabgabekreis und/oder die Generatoreinrichtung kann durch eine Steuerungseinrichtung oder eine Regelungseinrichtung erfolgen, d. h. mit oder ohne Rückkopplung einer Betriebsgröße der Kraftwärmekopplungsanlage.

Die Erfindung wird nachfolgend anhand von Ausführungsbeispielen unter Verwendung von Zeichnungen näher erläutert.

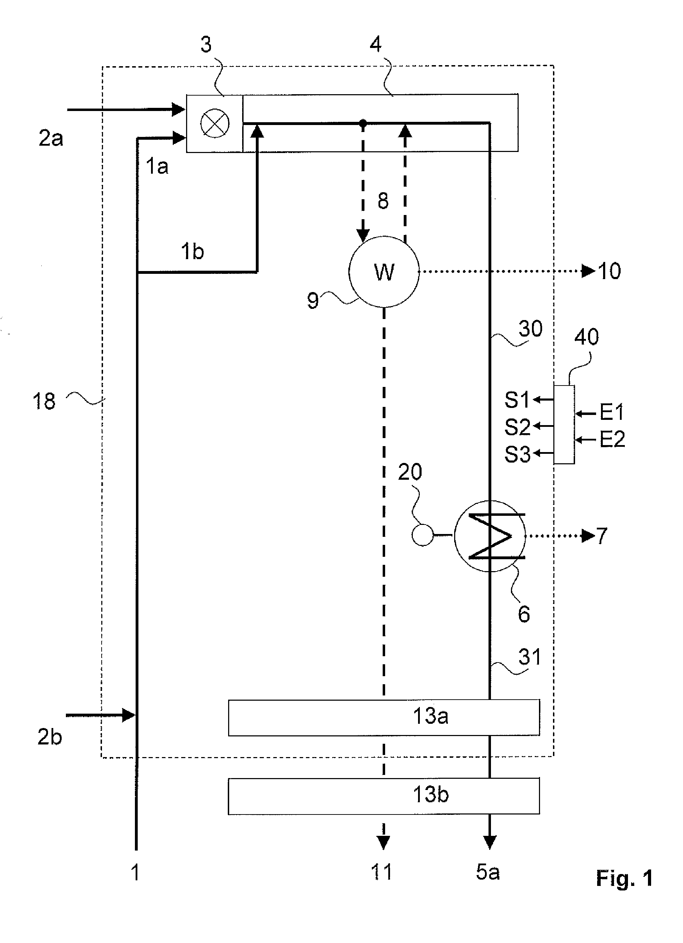

Die Figuren 1 bis 3 zeigen Kraftwärmekopplungsanlagen in drei unterschiedlichen Ausführungsformen. Die Kraftwärmekopplungsanlagen können z. B. als

Blockheizkraftwerke (BHKW) ausgebildet sein. In den Figuren werden gleiche Elemente mit gleichen Bezugszeichen bezeichnet, wie dies nachfolgend angegeben ist.
- 1: - Gesamt-Luftstrom, der einem Brenner zugeführt wird.
- 1a: - Eingangsluftstrom des Brenners.
- 1b: - Teilluftstrom, der in eine Brennkammer des Brenners geführt ist.
- 2a: - Brennstoff, der dem Brenner zugeführt wird.
- 2b: - Brennstoff, der dem Luftstrom 1 zugeführt wird.
- 3: - Brenner.
- 4: - Brennkammer des Brenners.
- 5a: - Erster Anteil eines vom Brenner abgegebenen Wärmestroms bzw erwärmten Massenstroms.
- 5b: - Zweiter Anteil des vom Brenner abgegebenen Wärmestroms bzw erwärmten Massenstroms.
- 6: - Erster Wärmeübertrager.
- 7: - Wärmeenergie, die an eine mit der Kraftwärmekopplungsanlage zu koppelnde Beheizungseinrichtung abgegeben wird (auch Prozesswärme genannt).
- 8: - Vom Brenner abgegebener Wärmestrom bzw. erwärmter Massenstrom, der einer Generatoreinrichtung zugeführt wird. Der von der Generatoreinrichtung nicht genutzte Anteil kann ggf. in die Brennkammer zurückgeführt werden.
- 9: - Generatoreinrichtung, z. B. ein Stirlingmotor, gegebenenfalls gekoppelt mit einem elektrischen Generator.
- 10: - Von der Generatoreinrichtung abgegebene mechanische und/oder elektrische Energie.
- 11: - Von der Generatoreinrichtung abgegebener Wärmestrom bzw. erwärmter Massenstrom, der auf Grund nicht vollständiger Umsetzbarkeit des Wärmestroms 8 in die Energie 10 von der Generatoreinrichtung 9 wieder abgegeben wird.
- 12: - Zweiter Wärmeübertrager einer Luftvorwärmungseinrichtung, die zum Vorwärmen der zum Brenner 3 bzw. zur Brennkammer 4 geführten Luft eingerichtet ist.
- 13a: - Interne Nutzungseinrichtungen der Kraftwärmekopplungsanlage zur Nutzung der verbleibenden Exergie von einem oder mehreren der Wärmeströme 5a, 5b, 11.
- 13b: - Externe Nutzungseinrichtungen zur Nutzung der verbleibenden Exergie von einem oder mehreren der Wärmeströme 5a, 5b, 11.
- 14: - Stellglied zur Beeinflussung der Menge des durch den ersten Wärmeübertrager 6 fließenden Wärmestroms bzw. erwärmten Massenstroms 5b.
- 15: - Stellglied zur Beeinflussung der Menge des von der Generatoreinrichtung 9 abgegebenen Wärmestroms bzw. erwärmten Massenstroms 11.
- 18: - Kraftwärmekopplungsanlage.
- 20: - Einstellmittel des ersten Wärmeübertragers 6.
- 21: - Einstellmittel des Stellglieds 15.
- 22: - Einstellmittel des Stellglieds 14.
- 23: - Einstellmittel des zweiten Wärmeübertragers 12.
- 30: - Leitung, z. B. Rohrleitung.
- 31: - Leitung, z. B. Rohrleitung.
- 32: - Leitung, z. B. Rohrleitung.
- 33: - Leitung, z. B. Rohrleitung.
- 34: - Leitung, z. B. Rohrleitung.
- 40: - Steuerungs- bzw. Regelungseinrichtung.

Die in der Figur 1 dargestellte Kraftwärmekopplungsanlage 18 weist einen Brenner 3 mit einer Brennkammer 4 auf. Dem Brenner 3 wird Brennstoff 2a zugeführt. Der Brennstoff 2a wird im Brenner 3 bzw. dessen Brennkammer 4 verbrannt. Hierdurch wird Wärme erzeugt, die als Wärmestrom bzw. erwärmter Massenstrom 8 an eine Generatoreinrichtung 9 abgegeben wird. Die Generatoreinrichtung 9 erzeugt hieraus mechanische und/oder elektrische Energie 10. Der auf Grund eines limitierten Wirkungsgrads der Generatoreinrichtung 9 nicht in Energie 10 umsetzbare Teil der zugeführten Wärmeenergie wird als Exergie in Form eines Wärmestroms bzw. erwärmten Massenstroms 11 wieder abgegeben oder in die Brennkammer zurückgeführt.

Die vom Brenner 3 erzeugte Wärme wird außerdem in Form eines Wärmestroms bzw. erwärmten Massenstroms 5a über Leitungen 30, 31 durch einen ersten Wärmeübertrager 6 (auch Wärmetauscher genannt) geführt. Der erste Wärmeübertrager 6 gibt Wärmeenergie 7, z. B. in Form eines Wärmestroms bzw. erwärmten Massenstroms, ab, der zur Zuführung zu einer Beheizungseinrichtung vorgesehen ist. Hierdurch wird ein Wärmeabgabekreis 6, 7 gebildet, der zur Kopplung mit einer Beheizungseinrichtung eingerichtet ist, z. B. einer Heizungsanlage eines Gebäudes, einer Maschine oder einer Industrieanlage.

Die vom ersten Wärmeübertrager 6 nicht in die Wärmeenergie 7 umsetzbare Energie wird über die Rohrleitung 31 abgeführt. Je nach Ausführung der Kraftwärmekopplungsanlage 18 kann eine interne Nutzungseinrichtung 13a oder eine externe Nutzungseinrichtung 13b oder ggf. auch beide Nutzungseinrichtungen 13a, 13b vorgesehen sein, mit denen die Energieströme 11, 5a weiter genutzt werden können.

Soweit entspricht die Kraftwärmekopplungsanlage 18 einer Kraftwärmekopplungsanlage gemäß dem Stand der Technik, z. B. einem Blockheizkraftwerk. Im Unterschied zum Stand der Technik weist die Kraftwärmekopplungsanlage 18 gemäß Figur 1 ein Entkopplungsmittel auf, das zur variablen Aufteilung der durch den Brenner 3 erzeugten Wärmeenergie auf den Wärmeabgabekreis 6, 7 und die Generatoreinrichtung 9 eingerichtet ist. Als Entkopplungsmittel fungiert gemäß Figur 1 der erste Wärmeübertrager 6. Hierfür ist der erste Wärmeübertrager 6 mit einem Einstellmittel 20 versehen, mit dem die Durchflussmenge des vom Brenner 3 abgegebenen Wärmestroms bzw. erwärmten Massenstroms 5a einstellbar ist, so dass durch die Einstellung festgelegt werden kann, wie viel Wärmeenergie 7 abgegeben wird.

Durch entsprechende Anpassung des ersten Wärmeübertragers 6 über das Einstellmittel 20 kann die durch den Brenner 3 erzeugte Wärmeenergie variabel auf die Generatoreinrichtung 9 und den ersten Wärmeübertrager 6 aufgeteilt werden. Das Einstellmittel 20 kann z. B. manuell oder durch eine automatische Einrichtung, z. B. über einen Stellmotor, betätigt werden. Der erste Wärmeübertrager 6 kann auch z.B. ein elektrisch betätigbares Ventil oder eine elektrisch betätigbare Klappe aufweisen. Auf diese Weise kann die variable Aufteilung der Wärmeenergie auch automatisch durch eine Steuerungs- oder Regelungseinrichtung nach entsprechenden Bedarfssignalen durchgeführt werden.

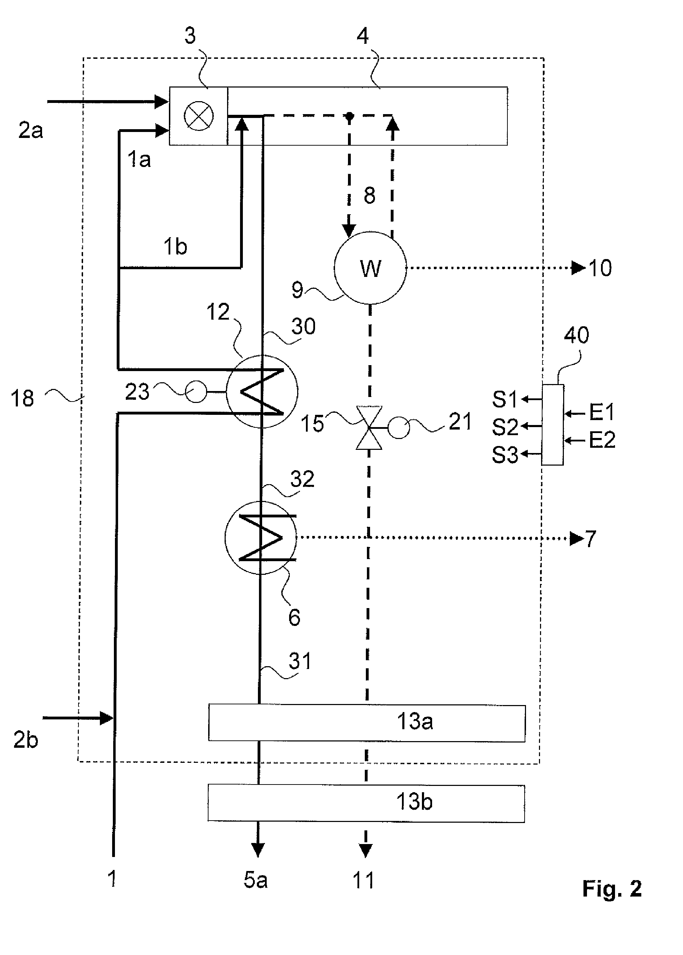

Bei der Ausführungsform der Kraftwärmekopplungsanlage 18 gemäß Figur 2 sind weitere Elemente ergänzt. Der Gesamt-Luftstrom 1 wird über einen zweiten Wärmeübertrager 12 einer Luftvorwärmungseinrichtung geführt. Der erste Wärmeübertrager 6 und der zweite Wärmeübertrager 12 werden von demselben vom Brenner 3 abgegebenen Wärmestrom bzw. erwärmten Massenstrom 5a durchströmt. Zuerst wird der zweite Wärmeübertrager 12 durchströmt, dann der erste Wärmeübertrager 6. Somit entziehen beide Wärmeübertrager 6, 12 dem Wärmestrom 5a Wärmeenergie. Dies ist ein weiterer Unterschied zu Kraftwärmekopplungsanlagen gemäß dem Stand der Technik, bei denen ggf. vorhandene Luftvorwärmungseinrichtungen erst hinter dem ersten Wärmeübertrager 6 angeordnet sind und somit mit dessen Abwärme betrieben werden. Vorteilhaft weist der zweite Wärmeübertrager 12 ein Einstellmittel 3 auf, mit dem der Durchfluss des Wärmestroms 5a bzw. erwärmten Massenstroms 5a eingestellt werden kann. Das Einstellmittel 23 kann in gleicher Weise ausgebildet sein wie das Einstellmittel 20. Insbesondere kann der zweite Wärmeübertrager 12 als Regenerator ausgebildet sein. Mittels des zweiten Wärmeübertragers 12 kann somit die vom Brenner 3 erzeugte Wärmeenergie variabel auf den Wärmeabgabekreis 6,7 und die Generatoreinrichtung 9 aufgeteilt werden.

Als weiterer Unterschied gegenüber Kraftwärmekopplungsanlagen gemäß dem Stand der Technik ist in der Figur 2 beispielhaft noch dargestellt, dass auch die von der Generatoreinrichtung 9 abgegebene Energie, d. h. der Wärmestrom bzw. erwärmte Massenstrom 11, über ein durch ein Einstellmittel 21 einstellbares Stellglied 15 hinsichtlich der Durchflussmenge beeinflusst werden kann. Das Stellglied 15 kann auch zwischen dem Brenner 3 bzw. der Brennkammer 4 und der Generatoreinrichtung 9 eingeordnet sein, so dass der Wärmestrom bzw. erwärmte Massenstrom 8 einstellbar ist. Hierdurch ergibt sich eine weitere Einstellmöglichkeit und damit ein zusätzlicher Freiheitsgrad zur variablen Entkopplung der Wärmeenergien, die der Generatoreinrichtung 9 und dem Wärmeabgabekreis 6, 7 zugeführt werden, voneinander.

Bei der Ausführungsform gemäß Figur 2 kann durch Regelung des Wirkungsgrads des zweiten Wärmeübertragers 12 die dem ersten Wärmeübertrager 6 noch zur Verfügung stehende, zugeführte Energie eingestellt werden und somit die abgegebene Energie 7 bedarfsgemäß angepasst werden. Mit höherem Wirkungsgrad des zweiten Wärmeübertragers 12 nimmt die Temperatur auf der Luftaustrittsseite, d. h. die Luftvorwärmtemperatur, zu. Bei höherer Luftvorwärmtemperatur wird der Brennstoffbedarf, der zum Erreichen einer bestimmten Brennkammertemperatur erforderlich ist geringer. Wird keine Energie 7 benötigt, muss also nur der Wärmestrom 8 zuzüglich eventuell auftretender Wärmeverluste durch den Brennstoff gedeckt werden. Mit sinkendem Wirkungsgrad des zweiten Wärmeübertragers 12 nimmt die Temperatur am Abgaseintritt des ersten Wärmeübertragers 6 zu, sodass Energie 7 abgeführt werden kann. Gleichzeitig verringert sich die Luftvorwärmtemperatur, und es muss mehr Brennstoff und ggf. Luft zugeführt werden.

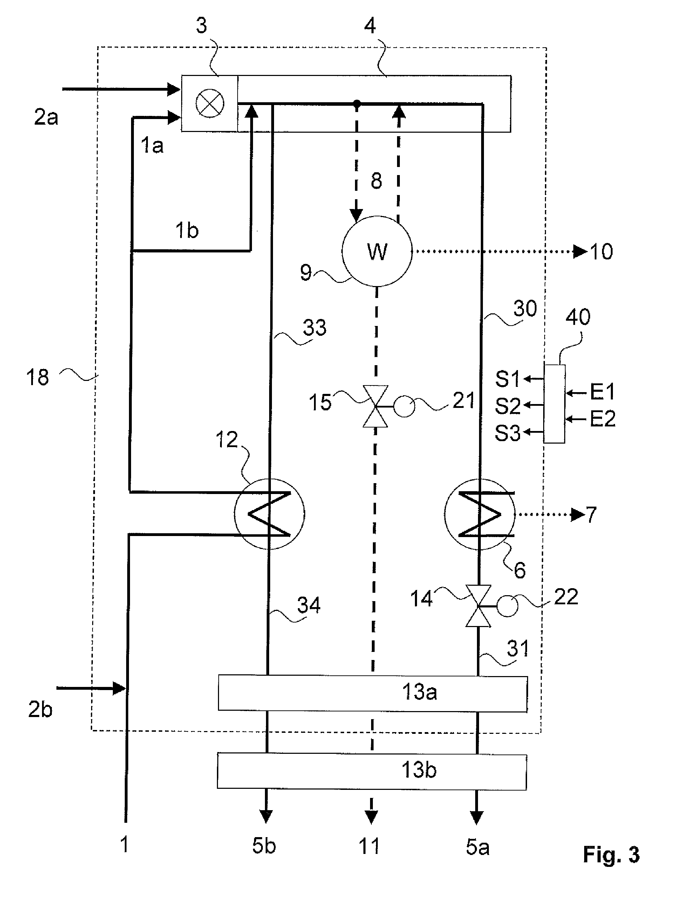

Die Figur 3 zeigt eine Ausführungsform einer Kraftwärmekopplungsanlage 18, bei der der erste Wärmeübertrager 6 in einer parallelen Leitung oder Bypassleitung zum zweiten Wärmeübertrager 12 angeordnet ist. Dem zweiten Wärmeübertrager 12 wird über eine Leitung 33 von dem Brenner 3 ein Wärmestrom bzw. erwärmter Massenstrom 5b zugeführt. Der erste Wärmeübertrager 6 erhält einen Wärmestrom bzw. erwärmten Massenstrom 5a über eine separate Leitung 30.

Die Figur 3 zeigt außerdem, dass das Entkopplungsmittel zur variablen Aufteilung der Wärmeenergie auch als von dem ersten Wärmeübertrager 6 separates Stellglied 14 mit einem Einstellmittel 22 ausgebildet sein kann, z. B. als einstellbares Ventil.

Ist ein Prozesswärmebedarf 7 vorhanden, werden die Bypassleitungen 30, 31 durch das Stellglied 14 ganz oder teilweise geöffnet. Ein Teil des mit dem Abgas mitgeführten Wärmeangebots wird mittels des ersten Wärmeübertragers 6 an einen Wärmeträger übertragen, wodurch sich das Abgas 5a selbst abkühlt.

Der durch das Stellglied 14 und/oder 15 geführte Wärmestrom bzw. erwärmte Massenstrom kann entweder durch kontinuierliche oder diskontinuierliche, z. B. pulsweitenmodulierte, Regelung des Massenstroms und/oder durch Regelung der Brennkammertemperatur angepasst werden. Als Regelgrößen können z. B. die Austrittstemperaturen der Wärmeströme 5a und/oder 11 oder andere geeignete Größen verwendet werden.

Durch eine abhängige oder voneinander unabhängige Einstellung der Stellglieder 14, 15 können somit sowohl die über den Wärmeabgabekreis 6, 7 abgegebene Energie 7 als auch die elektrische und/oder mechanische Energie 10 dem jeweiligen Bedarf angepasst werden. Diese Größen sind somit voneinander entkoppelt.

Die erfindungsgemäße Entkopplung ist in allen beschriebenen Ausführungsbeispielen desto wirkungsvoller, je größer der Wirkungsgrad des zweiten Wärmeübertragers 12 ist. Dementsprechend sind Regeneratoren, Latentwärmespeicher und thermochemische Wärmespeicher besonders geeignet als zweite Wärmeübertrager.

Eine alternative Nutzung der Exergie der Abgase 5a, 5b kann in allen beschriebenen Ausführungsbeispielen darin bestehen, dass diese teilweise dem Luftstrom 1 zugemischt werden. Neben der Erhöhung der Verbrennungslufttemperatur kann dadurch auch der Sauerstoffgehalt beeinfluss werden, was je nach Einstellung zu niedrigeren Schadstoffemissionen führt.

Anhand der Figur 1 bis 3 ist weiterhin dargestellt, dass auch eine automatische Steuerung oder Regelung der Einstellmittel 20, 21, 22, 23 durch eine Steuerungs- oder Regelungseinrichtung 40 erfolgen kann. Der Steuerungs- oder Regelungseinrichtung 40 werden äußere Eingangsgrößen E1, E2 zugeführt, z. B. in Form von Energiebedarfsmengen. Die Steuerungs- oder Regelungseinrichtung 40 erzeugt jeweils Stellsignale S1, S2, S3, die den Einstellmitteln zugeführt werden können, z. B. entsprechenden Stellmotoren oder Magnetgliedern der Einstellmittel.

Da bei gleichzeitigem Auftreten eines Bedarfs an Prozesswärme 7 am Wärmeübertrager 6 und eines Bedarfs an mechanischer bzw. elektrischer Energie an der Generatoreinrichtung 9 insgesamt mehr Energie abgeführt wird, muss mit dem Brennstoff 2a, 2b dem Brenner 3 mehr Energie zugeführt werden. Die Regelung des Brennstoffstroms kann anhand der Brennkammertemperatur und/oder einer anderen geeigneten Größe erfolgen. Bei größerem Brennstoffstrom ist mehr Luft erforderlich. Die Regelung der Luftmenge kann durch Anpassung des Verbrennungs- und/oder Gesamt-Luftstroms 1 nach bekannten Verfahren erfolgen.

## Patentansprüche

1. Kraftwärmekopplungsanlage (18), die wenigstens einen Brenner (3), einen Wärmeabgabekreis (6, 7), der zur Kopplung mit einer Beheizungseinrichtung eingerichtet ist, und eine Generatoreinrichtung (9) aufweist, die zur Wandlung von zugeführter Wärmeenergie in mechanische und/oder elektrische Energie (10) eingerichtet ist, wobei der Brenner (3) sowohl zur Speisung der Generatoreinrichtung (9) als auch des Wärmeabgabekreises (6, 7) mit durch den Brenner (3) erzeugter Wärmeenergie eingerichtet ist, **dadurch gekennzeichnet, dass** die Kraftwärmekopplungsanlage (18) wenigstens ein Entkopplungsmittel (6, 12, 14, 15) aufweist, das zur variablen Aufteilung der durch den Brenner (3) erzeugten Wärmeenergie auf den Wärmeabgabekreis (6, 7) und die Generatoreinrichtung (9) eingerichtet ist.

2. Kraftwärmekopplungsanlage nach Anspruch 1, **dadurch gekennzeichnet, dass** das Entkopplungsmittel (6, 12, 14, 15) dazu eingerichtet ist, die Menge der dem Wärmeabgabekreis (6, 7) zugeführten Wärmeenergie zu beeinflussen.

3. Kraftwärmekopplungsanlage nach Anspruch 2, **dadurch gekennzeichnet, dass** das Entkopplungsmittel (6, 12, 14, 15) ein Einstellmittel (20, 21, 22, 23) zur Einstellung des durch einen ersten Wärmeübertrager (6) des Wärmeabgabekreises (6, 7) geführten Wärmestroms bzw. erwärmten Massenstroms (5b) aufweist.

4. Kraftwärmekopplungsanlage nach Anspruch 3, **dadurch gekennzeichnet, dass** das Entkopplungsmittel (6, 12, 14, 15) in einer Zuführleitung (30) zur Zuführung des Wärmestroms bzw. erwärmten Massenstroms (5b) zu dem ersten Wärmeübertrager (6), in einer Abfuhrleitung (31) des ersten Wärmeübertragers (6) oder in dem ersten Wärmeübertrager (6) selbst angeordnet ist oder durch den ersten Wärmeübertrager (6) selbst gebildet wird.

5. Kraftwärmekopplungsanlage nach einem der vorhergehenden Ansprüche, **dadurch gekennzeichnet, dass** ein zweiter Wärmeübertrager (12) einer Luftvorwärmungseinrichtung, die zum Vorwärmen der zum Brenner (3) geführten Luft (1, 1 a, 1 b) eingerichtet ist, in einer Zuführleitung (30) zur Zuführung des Wärmestroms bzw. erwärmten Massenstroms (5a) zu dem ersten Wärmeübertrager (6) angeordnet ist.

6. Kraftwärmekopplungsanlage nach Anspruch 5, **dadurch gekennzeichnet, dass** das Entkopplungsmittel (6, 12, 14, 15) in einer Abfuhrleitung des zweiten Wärmeübertragers (12) oder in dem zweiten Wärmeübertrager (12) selbst angeordnet ist oder durch den zweiten Wärmeübertrager (12) selbst gebildet wird.

7. Kraftwärmekopplungsanlage nach Anspruch 5, **dadurch gekennzeichnet, dass** ein erster Wärmeübertrager (6) des Wärmeabgabekreises (6, 7) und der zweite Wärmeübertrager (12) über separate Zuführleitungen (30, 33) zur Zuführung des Wärmestroms bzw. erwärmten Massenstroms (5a, 5b) parallel mit dem Brenner (3) verbunden sind.

8. Kraftwärmekopplungsanlage nach einem der vorhergehenden Ansprüche, **dadurch gekennzeichnet, dass** die Generatoreinrichtung (9) als thermoelektrischer Wandler, insbesondere als durch einen Stirlingmotor angetriebene Generatoreinheit, ausgebildet ist.

9. Kraftwärmekopplungsanlage nach einem der vorhergehenden Ansprüche, **dadurch gekennzeichnet, dass** das Entkopplungsmittel (6, 12, 14, 15) hinsichtlich des Maßes der variablen Aufteilung der Wärmeenergie auf den Wärmeabgabekreis (6, 7) und die Generatoreinrichtung (9) über wenigstens eine äußere Eingangsgröße (E1, E2) einstellbar ist.

10. Kraftwärmekopplungsanlage nach einem der vorhergehenden Ansprüche, **dadurch gekennzeichnet, dass** der Wärmeabgabekreis (6, 7) einen als Wärmeübertrager mit regelbarem Wirkungsgrad ausgebildeten ersten Wärmeübertrager (6) aufweist.

11. Kraftwärmekopplungsanlage nach Anspruch 10, **dadurch gekennzeichnet, dass** der aktuelle Wirkungsgrad des ersten Wärmeübertragers (6) über das Einstellmittel (20, 21, 22, 23) einstellbar oder regelbar ist.

12. Verfahren zum Betrieb einer Kraftwärmekopplungsanlage (18), die wenigstens einen Brenner (3), einen Wärmeabgabekreis (6, 7), der zur Kopplung mit einer Beheizungseinrichtung eingerichtet ist, und eine Generatoreinrichtung (9) aufweist, die zur Wandlung von zugeführter Wärmeenergie in mechanische und/oder elektrische Energie (10) eingerichtet ist, wobei der Brenner (3) sowohl die Generatoreinrichtung (9) als auch den Wärmeabgabekreis (6, 7) mit durch den Brenner (3) erzeugter Wärmeenergie speist, **dadurch gekennzeichnet, dass** die durch den Brenner (3) erzeugte Wärmeenergie variabel nach Bedarf auf den Wärmeabgabekreis (6, 7) und die Generatoreinrichtung (9) aufgeteilt wird.

13. Verfahren nach Anspruch 12, **dadurch gekennzeichnet, dass** eine Aufteilung der durch den Brenner (3) erzeugten Wärmeenergie auf den Wärmeabgabekreis (6, 7) und die Generatoreinrichtung (9) gemäß einer Regelung erfolgt, der wenigstens eine in der Kraftwärmekopplungsanlage (18) gemessene interne Größe als Eingangsgröße zugeführt ist.

14. Verfahren nach Anspruch 12 oder 13, **dadurch gekennzeichnet, dass**
- Energiebedarfsmengen als äußere Eingangsgrößen (E1, E2) separat für den Wärmeabgabekreis (6, 7) und die Generatoreinrichtung (9) vorgebbar sind,
- die durch den Brenner (3) erzeugte Wärmeenergie nach Maßgabe der Summe der vorgegebenen Energiebedarfsmengen eingestellt wird und
- eine Aufteilung der durch den Brenner (3) erzeugten Wärmeenergie auf den Wärmeabgabekreis (6, 7) und die Generatoreinrichtung (9) entsprechend den einzelnen vorgegebenen Energiebedarfsmengen erfolgt.
